# EUROPÄISCHE PATENTSCHRIFT

(11) **EP 1 285 564 B1**
(45) Veröffentlichungstag und Bekanntmachung des Hinweises auf die Patenterteilung: **20.10.2004**
(21) Anmeldenummer: 02018610.2
(22) Anmeldetag: 20.08.2002
(51) Int. Cl.: A01C 7/20, A01B 63/22

(54) **Sämaschine mit Tiefeneinstellung durch ein hydraulisches Ausgleichssystem**
Sowing machine with hydraulic depth control system
Semoir avec système hydraulique pour contrôler la profondeur

(30) Priorität: 23.08.2001 DE 10141232
(43) Veröffentlichungstag der Anmeldung: 26.02.2003
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Steen, Rüdiger, 27798 Hude (DE)

(56) Entgegenhaltungen:
- WO-A-85/05246
- US-A- 4 977 841
- US-A- 5 724 902
- US-B1- 6 216 616

## Beschreibung

Die Erfindung betrifft eine Sämaschine mit einem Rahmen, an welchem mittels Lenker nebeneinander und zueinander höhenbeweglich angeordnete Tragräder, denen jeweils vorzugsweise zwei in und quer zur Fahrtrichtung versetzt zueinander angeordnete Scheibensäschare zugeordnet sind, angeordnet sind, wobei die Tragräder die Eindringtiefe der Scheibensäschare in den Boden bestimmen, wobei die Scheibenschare gemeinsam mittels einer Parallelogrammaufhängung am Rahmen angelenkt sind, und wobei die Tragräder mittels einer Viergelenkaufhängung am Rahmen angeordnet sind. Der das Tragrad tragende Lenkerarm der Viergelenkanordnung ist an einem am Rahmen schwenkbar angeordneten Verstellarm bzw. an einem zwischen zwei Verstellarmen angeordneten Tragrohr angelenkt. Die die Lenkarme der Tragräder tragenden Verstellarme sind durch das Verdrehen des Tragrohres mittels eines zwischen dem Rahmen und einem der Verstellarme angeordneten Hydraulikzylinders verschwenkbar. Eine derartige Maschine ist beispielsweise in der DK 169 636 B1 beschrieben.

Der Erfindung liegt die Aufgabe zugrunde, eine gute Bodenanpassung und Andruck der Tragräder gegen den Boden, die die Säschare führen, und eine gute Tiefeneinstellung für die Säschare mit einfachen Mitteln zu erreichen.

Diese Aufgabe wird durch die Merkmale des Anspruches 1 gelöst. Aufgrund der erfindungsgemäßen Merkmale wird durch das vorlaufende Tragrad in dem Bereich, in dem die Säschare die Säfurche ziehen, eine gewünschte gute gleichmäßige Bodenverdichtung und ein ruhiger Lauf der Säschare gewährleistet, so dass das Saatgut in gleichmäßiger Tiefe im Boden abgelegt werden kann. Durch das erfindungsgemäße hydraulische Ausgleichssystem zwischen dem Rahmen und den Tragrädern einerseits und dem Rahmen und dem Verstellarm andererseits wird eine Tiefeneinstellung mit einem hydraulischen Ausgleichssystem mit einfachen Baumitteln erreicht. Eine Tiefenänderung der Säschare kommt hier in bevorzugter Weise durch das Ausgleichssystem zwischen den Hydraulikzylindern, die zwischen den Tragarmen und dem Rahmen und dem Hydraulikzylinder, der zwischen dem Rahmen und dem Verstellarm angeordnet ist, zustande. Es wird hiermit die Ölmenge zwischen den Ausgleichszylindern und den zwischen dem Tragarm und dem Rahmen angeordneten Hydraulikzylindern korrigiert.

Dies wird in einfacher Weise dadurch erreicht, dass die bei einem Einschieben der Kolbenstange der den Tragrädern zugeordneten/m Hydraulikzylinder/n verdrängte Ölmenge in den den Verstallarm zugeordneten/m Hydraulikzylinder/n gedrückt wird, so dass die Kolbenstange/n dieser/s Hydraulikzylinder/s durch die verdrängte Ölmenge eingeschoben wird/werden. Eine einfache Ausgestaltung des oder der Hydraulikzylinder, die den Ölausgleich bewirken, lässt sich dadurch erreichen, dass der/die dem Verstellarm zugeordnete/n Hydraulikzylinder als doppelt wirkender/n Zylinder ausgebildet ist/sind. Es ist jedoch auch möglich, dass dem Verstellarm zwei einfach wirkende, jedoch entgegengesetzt wirkende Hydraulikzylinder zugeordnet sind.

Um eine einfache und genaue Tiefeneinstellung, die sich während der Verstellarbeit nicht verändert, zu erreichen, ist vorgesehen, dass zwischen dem Verstellarm und dem Rahmen zumindest ein einstellbarer Anschlag zur Einstellung des Verstellarmes gegenüber dem Rahmen angeordnet ist.

Die Erfindung basiert auf dem Grundgedanken, dass das Verschwenken des Tiefenverstellarmes bzw. -rahmens durch einen doppelt wirkenden Hydraulikzylinder bewerkstelligt wird, auf deren Einlassseite mit Öldruck der Verstellarm verschwenkt wird und auf der Auslassseite die Ölmenge aus dem Hydrauliksystem der zwischen den Tragarmen und dem Rahmen angeordnete Hydraulikzylinder korrigiert wird.

Weitere Einzelheiten der Erfindung sind der Beispielsbeschreibung und den Zeichnungen zu entnehmen. Hierbei zeigen
- Fig. 1: das erfindungsgemäße Hydrauliksystem für die Sämaschine in Prinzipdarstellung,
- Fig. 2: eine Tragrad-Scharanordnung in Seitenansicht mit der größtmöglichen Sätiefe für die Scheibenschare in Seitenansicht und
- Fig. 3: die Tragrad-Schareinheit, jedoch mit der geringstmöglichen Eindringtiefe der Scheibenschare in den Boden.

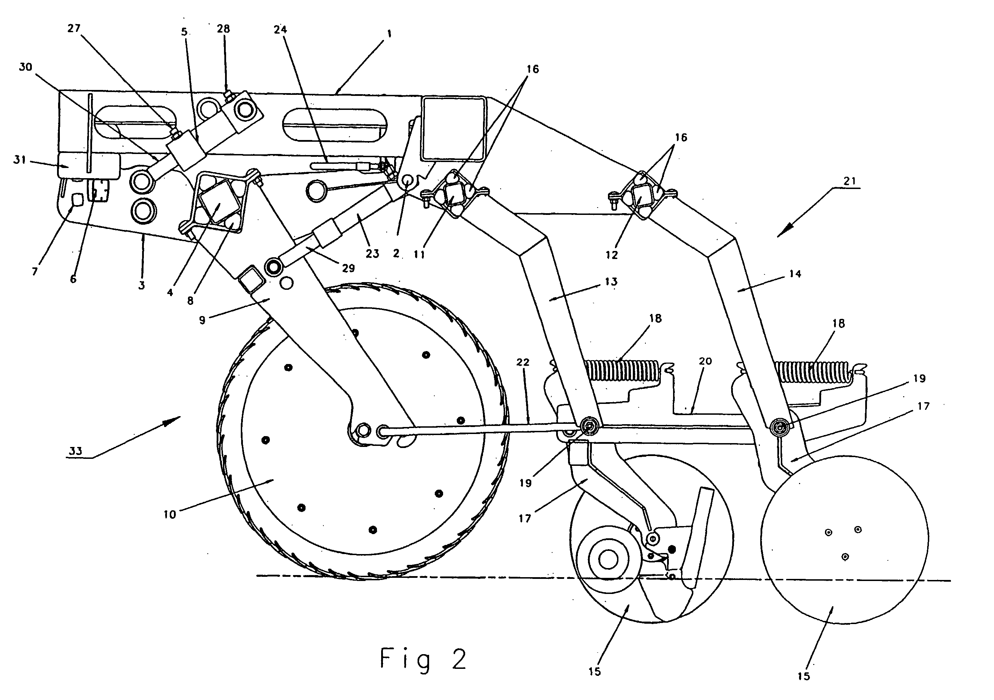

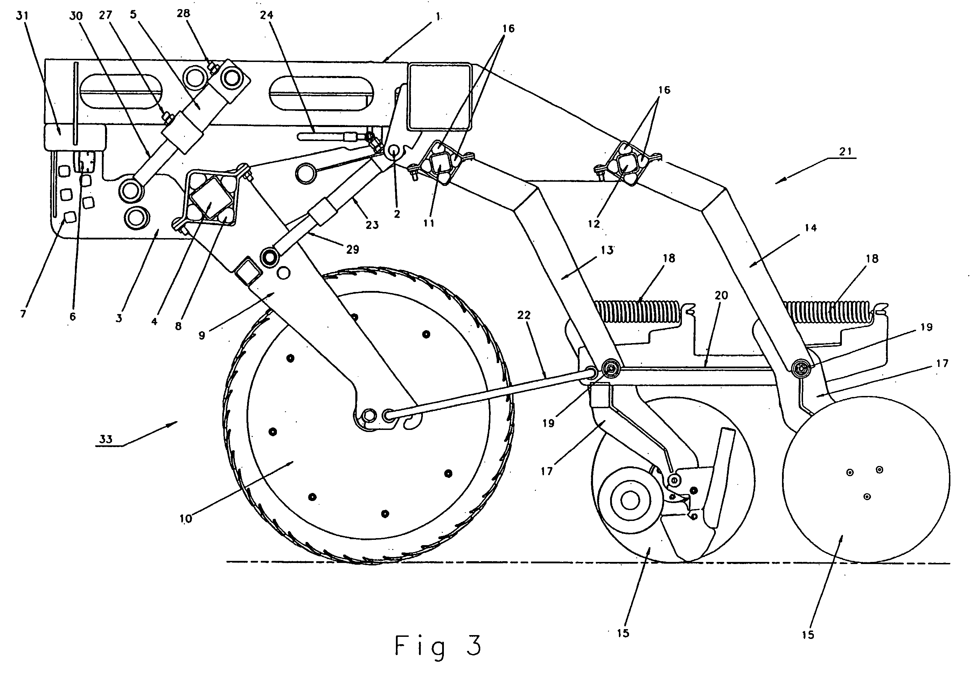

Der Rahmen 1 ist an einem Zentralrahmen einer Sämaschine angeordnet. Für Sämaschinen mit größerer Arbeitsbreite sind mehrere Rahmen 1 quer zur Fahrtrichtung nebeneinander jedoch, vorzugsweise in Fahrtrichtung gestaffelt zueinander angeordnet, um Arbeitsbreiten von 9, 12 und mehr Metern zu erreichen. Die einzelnen Rahmen sind in nicht näher dargestellter Weise in Transportstellung einklappbar an dem nicht dargestellten Zentralrahmen einer vorzugsweise gezogenen Sämaschine angeordnet. An dem Rahmen 1 ist mittels des Gelenkes 2 der Verstellarm 3, der Teil eines Verstellrahmens ist, angeordnet. Es sind zwei quer zur Fahrtrichtung beabstandete Verstellarme 3 angeordnet, die mittels des Tragrohres 4 miteinander verbunden sind und einen Verstellrahmen bilden. Zwischen dem Rahmen 1 und den beiden Verstellarmen 3 sind die doppelt wirkenden Hydraulikzylinder 5 angeordnet. Mittels der Hydraulikzylinder 5 ist der Verstellarm 3 des Verstellrahmens und somit das Tragrohr 4 in Höhenrichtung um den Drehpunkt des Gelenkes 2 verschwenkbar. An dem an dem Gelenk 2 abgewandten Ende der Verstellarme 3 sind die Anschläge 6 angeordnet, die in verschiedenen Positionen einstellbar sind bzw. in verschiedene an dem Stellarm angebrachten Durchbrüche 7 einstellbar sind um so, wie die Fig. 2 und 3 zeigen, den Verstellarm 3 in unterschiedlichen Positionen zu dem Rahmen 1 zu fixieren. Hierdurch weist dann das Tragrohr 4 unterschiedliche Abstände zu dem Rahmen 1 auf. Auf dem Tragrohr 4 sind jeweils mittels der Gummilagerungen 8 die Tragarme 9 für das jeweilige Tragrad 10 in begrenztem Umfang federnd schwenkbar gelagert. Am hinteren Ende des Rahmens 1 sind in Fahrtrichtung beabstandet zueinander zwei quer zur Fahrtrichtung verlaufende Tragbalken 11 und 12 angeordnet. Auf diesen Tragbalken 12 sind die Lenker 13 und 14, welche die Säschare 15 tragen, mittels der Gummilagerung 16 schwenkbar angeordnet. Die Säschare 15 sind mittels der Schartragarme 17 gegen die Feder 18 nach oben gegenüber den Lenker 12 und 13 ausweichbar an dem die Lenker 13 und 14 mittels Gelenke 19 verbindenden Querlenker 20 bzw. an dem Gelenkbolzen der Gelenke 19 befestigt. Die Lenker 13 und 14 sind so angeordnet, bzw. derart angelenkt, dass sie eine Parallelogrammführung 21 für die hinter dem Tragrad 10 angeordneten Scheibensäschare 15 bilden. Hierzu sind die Lenker 13 und 14 an ihrem unteren Ende mittels dem als Strebe 20 ausgebildeten Querlenker miteinander gelenkig verbunden. Den Scheibensäscharen 15 wird in bekannter und daher nicht näher dargestellter Weise über Förderleitungen das Saatgut von bekannten Dosier- und Förder- und Verteileinrichtungen aus einem Vorratsbehälter in einstellbaren Mengen zugeführt.

Der Tragarm 9 des Tragrades 10 ist über die Stange 22 mit dem vorderen Lenker 13 der Scharanordnung bzw. der Schartragarme 17 oder den Oberlenker 20verbunden. Somit sind die Tragräder 10 mittels einer Viergelenkaufhängung, die vorzugsweise annähernd als Parallelogrammaufhängung ausgebildet ist, am Rahmen 1 angeordnet, während die Säschare 15 mittels der Parallelogrammaufhängung 21 am Rahmen 1 angeordnet sind.

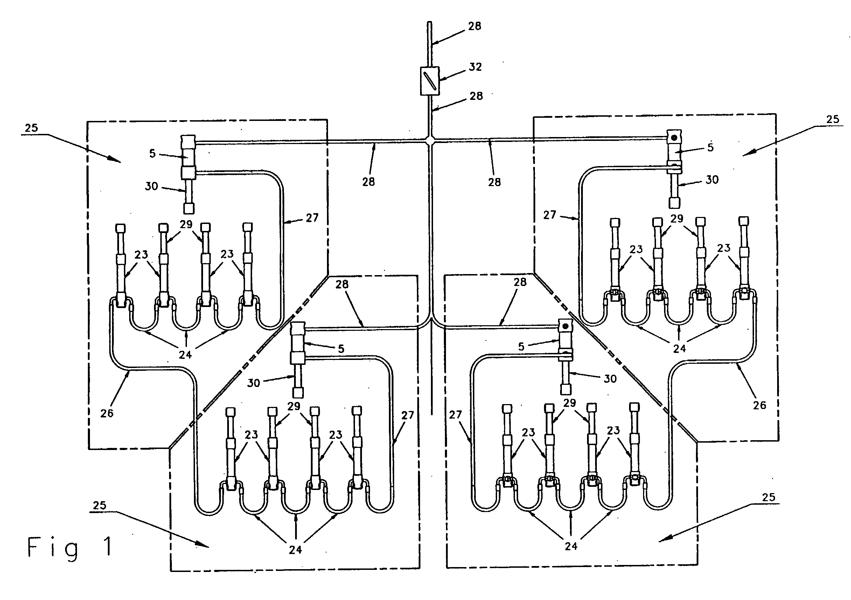

Zwischen dem Rahmen 1 und jedem Tragarm 9 für jedes Tragrad 10 ist ein Hydraulikzylinder 23 angeordnet. Die den einzelnen Tragarmen 9 zugeordneten Hydraulikzylinder 23 sind, wie der Hydraulikschaltplan gemäß Fig. 1 zeigt, über Leitungen 24 miteinander verbunden. In dem Schaltplan gemäß Fig. 1 sind vier Rahmen 1 dargestellt, wobei jeweils eine Teilsektion 25 einem Rahmen 1 entspricht. Außerdem sind die Hydraulikzylinder 23 der Telsektionen 25 eine Maschinenhälfte über die Leitung 26 untereinander verbunden. Jedem Rahmen ist zumindest ein doppelt wirkender Hydraulikzylinder 5 zugeordnet, mittels welchem der Verstellarm 3 bzw. Verstellrahmen gegenüber dem Rahmen 1 verstellt werden kann. Des weiteren sind die Hydraulikzylinder 23, die den Tragarmen 9 der Tragräder 10 zugeordnet sind, über eine Leitung 27 mit dem zwischen dem Verstellarm und dem Rahmen 1 angeordneten Zylinder 5 verbunden, während die andere Seite des Zylinders 5 über die Leitung 28 mit einer Hydraulikanlage, beispielsweise der Schlepperhydraulikanlage verbunden ist.

Hierbei sind die Hydraulikzylinder 5 und 23 derart miteinander verbunden, dass beim Einschieben der Kolbenstange 29 der den Tragrädern 10 zugeordneten Hydraulikzylinder 23 verdrängte Ölmenge in den den Verstellarm 3 zugeordneten Hydraulikzylinder 5 gedrückt wird, so dass die Kolbenstange 30 dieses Hydraulikzylinders 5 durch die verdrängte Ölmenge eingeschoben wird.

An Stelle eines doppelt wirkenden Hydraulikzylinders 5, der dem Verstellarm 3 zugeordnet ist, können auch zwei einfach wirkende, jedoch entgegengesetzt wirkende Hydraulikzylinder hier angeordnet sein.

Die Funktionsweise der Tiefeneinstellung ist folgende:

Um eine größere Arbeitstiefe als in Fig. 3 dargestellt, d.h. Eindringtiefe der Scheibensäschare 15 in den Boden als in Fig. 1 einzustellen, wird zunächst der Anschlag 6 in dem Verstellarm 3 entfernt. Dann wird über das Hydraulikventil der Schlepperanlage, an welche der Hydraulikzylinder 5 unter Leistung 28 angeschlossen ist, auf freien Durchgang geschaltet nachdem das Sperrventil 32 in der Leitung 28 geöffnet worden ist, so dass Öl aus den Hydraulikzylindern 5 herausgedrückt werden kann. Hierzu wird der Zentralrahmen, an dem die Rahmen 1 angelenkt sind, durch Anheben der dem Zentralrahmen zugeordneten Laufrädern abgesenkt, so dass die Verstellarme 3 die Kolben 30 in die Hydraulikzylinder 5 hineindrücken. Gleichzeitig drücken die Tragarme 9 die Zylinderkolben 29 in den Zylinder 23 hinein, wobei das so aus diesen Zylindern 23 herausgedrückte Öl über Leitung 27 in die Hydraulikzylinder 5, die zwischen dem Rahmen 1 und dem Verstellarm 3 gedrückt wird, so dass hier ein Ausgleich zwischen den Zylindern 5 und 23 stattfindet. Der Zylinder 5 wirkt als Differentiali-Zylinder. Der Anschlagbolzen 6 ist in ein tieferes Loch 7, wie in Fig. 2 dargestellt, gesteckt, so dass diese Bestellbewegung so lange geht, bis der Anschlag an dem Gegenanschlag 31 am Rahmen 1 anliegt. Anschließend wird das Schlepperventil geschlossen bzw. ein in dem von den Zylindern 5 zu der Schlepperhydraulikanlage führenden Leitung 28 angeordneten Sperrventil 32 abgesperrt. Wenn eine kleinere Ablagetiefe, als in Fig. 3 dargestellt, eingestellt werden soll, wird zunächst das Sperrventil 32 geöffnet und über das Schlepperventil wird von der Schlepperhydraulikanlage Öl über die Leitung 28 in die Hydraulikzylinder 5 gedrückt, so dass der Kolben 30 der Hydraulikzylinders bzw. der Hydraulikzylinder 5, die zwischen dem Rahmen 1 und dem Verstellarm 3 angeordnet sind, ausgefahren wird und hierdurch den Verstellarm 3 nach unten, beispielsweise in die in Fig. 2 dargestellte Position drückt. Wenn die richtige Position eingestellt ist, die durch das Abstecken des Anschlagbolzen 6 in das vorgesehene Loch 7 in dem Verstellarm 3 eingestellt ist und der Anschlag 6 an dem Gegenanschlag 31 an dem Rahmen 1 anliegt, wird ebenfalls wieder die von dem Hydraulikzylinder bzw. Zylindern 5 führende Leitung 28 zu der Schlepperhydraulikanlage über das Sperrventil 32 abgesperrt. Während von der Schlepperhydraulikanlage Öl in die Zylinder 5 gedrückt wird, wird gleichzeitig von der abgewandten Kammer Öl verdrängt und über die Leitungen 27 in die Hydraulikzylinder 23 gedrückt, so dass die Kolbenstangen 29 ausfahren und die Tragarme 9 der Tragräder 10 entsprechend verschwenken.

Hierdurch wird somit die Tiefeneinstellung entsprechend bei dem erfindungsgemäßen System korrigiert.

Zusammenfassend soll die Funktion nochmals zusammengefasst werden:

Das Scharsystem besteht aus zwei miteinander gekoppelten Parallelogrammen 21 bzw. einem Parallelogramm 21 angenäherten Viergelenk 3,9,13,22. Das den Scharen 15 zugeordnete Parallelogramm 21 besteht aus den Lenkern 13,14, den Oberlenker 20 so wie dem festen Rahmen 1, während das Viergelenk 33 bzw. das annähernde Parallelogramm aus dem Tragarm 9, der Verbindungsstange 22, dem vorderen Scharlenker 13 und dem Verstellarm 3 besteht. Um die Eindringtiefe der Schare 15 in den Boden einzustellen, wird der Tiefenverstellrahmen 3 über den als doppeltwirkenden Stellzylinder ausgebildete Hydraulikzylinder 5 verschwenkt. Durch den Anschlag 6 kann die Position des Verstellrahmens 3 gegenüber dem Rahmen 1 genau fixiert werden. Durch unterschiedliches Abstecken des als Exenterbolzen ausgebildeten Anschlages 31 kann an allen weiteren Rahmen 1 die Tiefe gleichmäßig eingestellt werden. Die Ablagetiefe der Schare 15, die über die Scharträger 17 an dem Oberlenker 20 angeordnet sind, wird verändert, in dem die Rahmenhöhe verändert wird durch Verschwenken des Tiefenverstellrahmens 3. Die Höhe kann jedoch bei diesem System nur verändert werden, wenn die Ölmenge aller zusammengeschalteter Ausgleichszylinder 23, die zwischen dem Tragarm 9 des Tragrades 10 und dem Rahmen 1 angeordnet sind, ebenfalls korrigiert wird. Hierzu sind diese Hydraulikzylinder 5 und 23 zusammengeschaltet. Die Anlenkung des Hydraulikzylinders 5 und die Dimensionierung ist so gewählt, dass die aufzunehmende Ölmenge aus den Zylindern 23 vom Rücklauf der Zylinder 5 aufgenommen werden kann. Der Ölkreislauf der Ausgleichszylinder 23 bleibt bei der Tiefenverstellung Volumenkonstant und geschlossen.

## Patentansprüche

1. Sämaschine mit einem Rahmen, an welchem mittels Lenker nebeneinander und zueinander höhenbeweglich angeordnete Tragräder, denen jeweils vorzugsweise zwei in und quer zur Fahrtrichtung versetzt zueinander angeordnete, vorzugsweise als Scheibensäschare ausgebildete Säschare (15) zugeordnet sind, angeordnet sind, wobei die Tragräder (10) die Eindringtiefe der Säschare (15) in den Boden bestimmen, wobei die Schare (15) gemeinsam mittels einer Parallelogrammaufhängung (1,13,14,20,21) am Rahmen (1) angelenkt sind, wobei die Tragräder (10) mittels einer Viergelenkaufhängung (3,9,13,22,33), vorzugsweise annähernd als Parallelogrammaufhängung ausgebildet , am Rahmen (1) angeordnet sind, wobei der das Tragrad (10) tragende Lenkerarm (9) der Viergelenkanordnung (33) an einem am Rahmen (1) schwenkbar angeordneten Verstellarm (3) bzw. an einem zwischen zwei Verstellarmen (3) angeordneten Tragrohr (4) angelenkt ist, wobei das Tragrad (10) vor den Scharen (15) angeordnet ist, wobei zwischen jedem das Tragrad (10) tragende Lenkerarm (9) und dem Rahmen (1) ein Hydraulikzylinder (23) angeordnet ist, wobei zwischen dem Verstellarm (3) und dem Rahmen (1) zumindest ein weiterer Hydraulikzylinder (5) angeordnet ist, wobei die den Tragarmen (9) zugeordneten Hydraulikzylinder (23) mit den den Verstellarmen (3) zugeordneten Hydraulikzylinder (5) miteinander über Hydraulikleitungen (27) miteinander verbunden sind.

2. Sämaschine nach Anspruch 1, **dadurch gekennzeichnet, dass** die Hydraulikzylinder (5,23) derart miteinander verbunden sind, dass die bei einem Einschieben der Kolbenstange (29) der den Tragrädern (10) zugeordneten/m Hydraulikzylinder/n (23) verdrängte Ölmenge in den den Verstallarm (3) zugeordneten/m Hydraulikzylinder/n (5) gedrückt wird, so dass die Kolbenstange/n (30) dieser/s Hydraulikzylinder/s (5) durch die verdrängte Ölmenge eingeschoben wird/werden.

3. Sämaschine nach Anspruch 1, **dadurch gekennzeichnet, dass** der/die dem Verstellarm (3) zugeordnete/n Hydraulikzylinder (5) als doppelt wirkender/n Zylinder ausgebildet ist/sind.

4. Sämaschine nach Anspruch 1, **dadurch gekennzeichnet, dass** dem Verstellarm zwei einfach wirkende, jedoch entgegengesetzt wirkende Hydraulikzylinder zugeordnet sind.

5. Sämaschine nach einem oder mehreren der vorstehenden Ansprüche, **dadurch gekennzeichnet, dass** zwischen dem Verstellarm (3) und dem Rahmen (1) zumindest ein einstellbarer Anschlag (6) zur Einstellung des Verstellarmes (3) gegenüber dem Rahmen (1) angeordnet ist.

## Claims

1. Seed drill including a frame, on which are disposed support wheels, which are disposed adjacent each other so as to be vertically displaceable relative to one another by means of link rods, associated with each support wheel are preferably two sowing coulters (15), which are disposed offset to one another in and transversely relative to the direction of travel and are preferably in the form of disc coulters, wherein the support wheels (10) determine the depth of penetration of the sowing coulters (15) in the ground, wherein the coulters (15) are pivotally mounted in common on the frame (1) by means of a parallelogram suspension means (1,13,14, 20, 21), wherein the support wheels (10) are disposed on the frame by means of a four-link suspension means (3, 9, 13, 22, 33), which is preferably almost in the form of a parallelogram suspension means, wherein the trailing arm (9) of the four-link suspension means (33) supporting the support wheel (10) is pivotally mounted on an adjusting arm (3), which is pivotally disposed on the frame (1), or respectively on a support tube (4) which is disposed between two adjusting arms (3), wherein the support wheel (10) is disposed in front of the coulters (15), wherein a hydraulic cylinder (23) is disposed between the frame (1) and each trailing arm (9) supporting the support wheel (10), and wherein at least one additional hydraulic cylinder (5) is disposed between the adjusting arm (3) and the frame (1), wherein the hydraulic cylinders (23) associated with the support arms (9) are interconnected with the hydraulic cylinders (5) associated with the adjusting arms (3) via hydraulic lines (27).

2. Seed drill according to claim 1, **characterised in that** the hydraulic cylinders (5, 23) are interconnected in such a manner that the oil quantity displaced with one insertion of the piston rod (39) of the hydraulic cylinder or cylinders (23) associated with the support wheels (10), is compressed in the hydraulic cylinder or cylinders (5) associated with the adjusting arm (3), such that the piston rod or piston rods (30) of this hydraulic cylinder or of these hydraulic cylinders (5) is or are pushed in by the displaced oil quantity.

3. Seed drill according to claim 1, **characterised in that** the hydraulic cylinder or cylinders (5) associated with the adjusting arm (3) is or are in the form of a double-acting cylinder or cylinders.

4. Seed drill according to claim 1, **characterised in that** two single-acting but reverse-acting hydraulic cylinders are associated with the adjusting arm.

5. Seed drill according to one or more of the preceding claims, **characterised in that** at least one adjustable stop member (6) for adjusting the adjusting arm (3) relative to the frame (1) is disposed between the adjusting arm (3) and the frame (1).

## Revendications

1. Semoir équipé d'un châssis sur lequel sont montées, des roues porteuses juxtaposées et mobiles en hauteur l'une par rapport à l'autre, grâce à des articulations et associées à chaque fois à de préférence deux socs semeurs (15), de préférence des socs semeurs à disque, décalés l'un par rapport à l'autre dans le sens d'avancement et transversalement par rapport à lui, les roues porteuses (10) déterminant la profondeur d'enfoncement dans le sol des socs semeurs (15), articulés sur le châssis (1) au moyen d'une suspension à parallélogramme (1, 13, 14, 20, 21), les roues porteuses (10) étant reliées au châssis (1) par une suspension à quatre articulations (3, 9, 13. 22, 33) constituée, de préférence, au moins approximativement, par un parallélogramme, le bras de guidage (9) de la roue porteuse (10) du dispositif à quatre articulations (33) étant articulé sur un bras de réglage (3) disposé sur le châssis (1) pour pivoter, ou sur un tube support (4) disposé entre deux bras de réglage (3), la roue porteuse (10) étant disposée devant les socs (15), un vérin hydraulique (23) étant monté entre chaque bras de guidage (9) portant la roue (10) et le châssis (1), au moins un autre vérin hydraulique (5) étant monté entre le bras de réglage (3) et le châssis (1), les vérins hydrauliques (23) associés aux bras support (9) étant reliés ensemble avec les vérins hydrauliques (5) associés aux bras de réglage (3) ensemble par des canalisations hydrauliques (27).

2. Semoir selon la revendication 1,
**caractérisé en ce que**
les vérins hydrauliques (5, 23) sont reliés pour que la quantité d'huile refoulée lors de la rétraction de la tige de piston (29) du ou des vérins hydrauliques (23) associés aux roues porteuses (10) soit repoussée dans le ou les cylindres hydrauliques (5) associés au bras de réglage (3), si bien que la ou les tiges de piston (30) vérins hydrauliques (5) par la quantité d'huile refoulée.

3. Semoir selon la revendication 1,
**caractérisé en ce que**
le ou les vérins hydrauliques (5) associés au bras de réglage (3) est ou sont des vérins hydrauliques à double effet.

4. Semoir selon la revendication 1,
**caractérisé en ce que**
deux vérins hydrauliques à simple effet mais en opposition sont associés au bras de réglage.

5. Semoir selon l'une ou plusieurs des revendications précédentes,
**caractérisé en ce qu'**
au moins une butée réglable (6) est disposée entre le bras de réglage (3) et le châssis (1) pour le réglage du bras de réglage (3) par rapport au châssis (1).
